# EUROPEAN PATENT SPECIFICATION

(11) **EP 2 983 346 B1**
(45) Date of publication and mention of the grant of the patent: **21.08.2019**
(21) Application number: 15161323.9
(22) Date of filing: 27.03.2015
(51) Int. Cl.: H04M 3/51, H04M 7/00, G06Q 30/00, H04M 3/436, H04M 3/42

(54) **A telecommunication method for controlling communication in a telecommunication system**
KOMMUNIKATIONSVERFAHREN ZUR STEUERUNG DER KOMMUNIKATION IN EINEM TELEKOMMUNIKATIONSSYSTEM
PROCÉDÉ DE TÉLÉCOMMUNICATION POUR COMMANDER LA COMMUNICATION DANS UN SYSTÈME DE TÉLÉCOMMUNICATION

(30) Priority: 27.03.2014 US 201414227050
(43) Date of publication of application: 10.02.2016
(73) Proprietor: SAP SE, 69190 Walldorf (DE)
(72) Inventor: Busch, Carsten, 69190 Walldorf (DE); Klumpp, Christian, 69190 Walldorf (DE)
(74) Representative: Richardt Patentanwälte PartG mbB

(56) References cited:
- US-B1- 8 447 016
- US-B2- 7 593 522

## Description

### BACKGROUND

Operators having access to an interaction center such as a telephone call center may use a number of automated computer systems to interact with a user while on a call with the user. In some instances, the computer systems may enable naviga-from one program, display pane, or screen area to another in order to provide access the information related to the operator's interaction with the user. In some instances, a numerous navigation gestures and actions may be received by the computer system during a typical interaction with the user. In some conventional systems, user related information and transactions, including context supporting documents, have to be searched for by navigating to different screens, applications, and user interfaces.

US 8447016 B1 discloses system and method for emulating call center screen-pop application.

US 7593522 B2 discloses methods and apparatus for a call center system for an agent to answer calls from customers of a business.

### SUMMARY

Various embodiments provide a telecommunication method for controlling communication in a telecommunication system, a telecommunication system, and a computer program product as described by the subject matter of the independent claims. Advantageous embodiments are described in the dependent claims.

In one aspect, the invention relates to a telecommunication method for controlling communication in a telecommunication system, the telecommunication system comprising a call center, the call center comprising a server communicating with at least one telecommunication device, the server comprising a processor and a memory, the memory storing a first application comprising instructions that, when executed by the processor, causes the processor to display on a display device of the telecommunication device at least a first graphical user interface. The method comprises:
- receiving a first communication session initiation signal via a first network from a user device, wherein the user device is operable to connect to the server via at least the first network;
- determining signaling data indicative of the user device using a communication protocol of the first network and the first communication initiation signal, the signaling data further indicating the first communication session and other communication means supported by the user device;
- displaying on the first graphical user interface a first set of user interface elements indicative of the signaling data, the first set of user interface elements further indicating communication means comprising an indication of the first communication session and the other communication means;
- receiving a selection via the first graphical user interface of one of the (displayed or indicated by the first set of user interface elements) communication means;
- in response to receiving the selection of the communication means:
   ▪ establishing the first communication session with the user device according to the received first communication session initiation signal, or
   ▪ establishing a second communication session with the user device using the signaling data;
- receiving a service request from the user device via the established communication session;
- determining using the service request at least one second application for generating response data in response to the service request;
- controlling the second application for generating the response data;
- displaying on the first graphical user interface a second set of user interface elements indicative of the response data and the second application, wherein displaying comprises configuring the first and/or second set of user interface elements for displaying the first and second set of user interface elements on a single display page of the first graphical user interface;
- receiving a selection of the response data via the first graphical user interface;
- sending the selected response data to the user; and
- closing (ending) the established communication session.

The above features may have the advantage of reducing the handle or interaction time in the call center as they may avoid usage of multiple graphical user interfaces. The handle time is the duration of one communication session during which a call (and/or online communication) from start to finish of the call (and/or of the online communication) is handled by a user of the call center.

The term "display page" refers to a portion of the graphical user interface to be displayed on display means in a manner perceivable or visible by a user e.g. without using scrolling function of the graphical user interface.

The term "communication session" includes, but it is not limited to communication over a network, such as telephone call over a cellular network, over the Public Switched Telephone Network (PSTN), or over an Internet Protocol (IP) network. It may also include communication via pager, "walkie talkie", network based instant connect communication, also known as Push to Talk, or a communication session that can be initiated from a device.

According to one embodiment, the displaying on the first graphical user interface of the second set of user interface elements comprising: configuring the second application for preventing displaying by the second application of graphical user interfaces, and redirecting outputs of the second application to be displayed on the prevented graphical user interfaces to the first graphical user interface to be displayed as part of the second set of user interface elements.

According to one embodiment, the instructions when executed by the processor, further cause the processor to display on the display device of the telecommunication device a second graphical user interface, wherein the displaying of the first set of user interface elements comprises discarding the second graphical user interface.

These embodiments may have the advantage of further reducing the handle time since the time required for managing such additional graphical user interfaces may be saved. Another advantage of the above embodiments may reside in the fact that the present method may be seamlessly integrated in existing systems that use multiple graphical user interfaces for initiating communication sessions with users.

According to one embodiment, the server is connected to multiple telecommunication devices, wherein the displaying on the first graphical user interface comprises: determining a distance between the user device and each of the telecommunication devices; selecting the telecommunication device from the multiple telecommunication devices as having the smallest distance.

This embodiment may have the advantage of further reducing the handle time by choosing the fastest communication channel based on the physical distances of communicating devices.

According to one embodiment, the sending of the response data comprises: selecting a communication means of the communication means having a faster data transfer rate; sending the response data using the selected communication means. This embodiment may have the advantage of further reducing the handle time.

According to one embodiment, an owner of the user device is registered at the call center, wherein the established communication session is a voice communication session. The method further comprises sending via the established communication session a request for a vocal signal reciting at least one predefined term; authenticating the user by comparing the received vocal signal of the user to a registered digital voiceprint of the owner.

According to one embodiment, an owner of the user device is registered at the call center, wherein the established communication session is a video communication session. The method further comprises capturing an image of the user; authenticating the user by comparing the captured image with a registered fingerprint image of the owner.

According to one embodiment, in case of an unsuccessful authentication of the user, closing the established communication session.

According to one embodiment, the established communication session is the second communication session, the method further comprising in case of a successful authentication of the user closing the establishing second communication session and establishing the first communication session.

These embodiments may have the advantage of securing access to the call center and preventing malicious access to data of the owner. This may also save time in the call center by prematurely ending undesired communications with non-authenticated users. This is in contrast to a method where the authentication is performed using a sequence of ad-hoc tests to authenticate the user.

According to one embodiment, configuring the first and second set of user interface elements comprises: using a first color scheme for the first set of user interface elements for decreasing visibility of the first set of user interface elements. For example, the displaying of the first set of user interface elements (before the configuring step) may use a default color scheme that provides a visibility higher than the visibility provided by the first color scheme. By reducing the visibility of the first set of user interface elements (e.g. by rendering the first set of user interface elements transparent) the visibility of the second set of user interface elements may be increased. This may reduce the reading time of the content of the first graphical user interface compared to the case where the first and second sets of user interface elements have the same visibility. The reading time may further be increased by the following embodiment.

According to one embodiment, the method further comprises using a second color scheme for the second set of user interface elements for enhancing visibility of the second set of user interface elements. Instead of using the default color scheme, the present method may use the second color scheme.

According to one embodiment, the method further comprises caching data related to the data request of the user for usage at subsequent service requests by the user.

In another aspect, the invention relates to computer program product computer program product comprising computer executable instructions to perform the method steps of the method of the preceding embodiments.

In another aspect, the invention relates a telecommunication system comprising a call center, the call center comprising a server communicating with at least one telecommunication device, the server comprising a processor and a memory, the memory storing a first application comprising instructions that, when executed by the processor, causes the processor to display on a display device of the telecommunication device at least a first graphical user interface, wherein the telecommunication system is operable to execute the method as claimed in one of the pre-ceding embodiments.

In another aspect, the invention relates to a computer-implemented method comprising: receiving a call from a customer; determining, in response to receiving the call, interactions with the customer and relevant business objects relating to the interactions; and presenting, simultaneously in a user interface display pane, representations of the interactions and the relevant business objects relating to the interactions.

According to one embodiment, the customer is one of an existing customer and a prospective customer.

According to one embodiment, the determining of the interactions and the relevant business objects comprises: referencing stored data for indications of the customer based on identifying information received in the call; determining prior interactions with the customer as indicated in the stored data; and determining the relevant business objects by referencing the stored data for business objects related to, at least, the customer and the prior interactions.

According to one embodiment, the method further comprises: creating a new interaction initiated by the received call; determining at least one business object relating to the new interaction; storing data relating to the new interaction, including, at least, an indication of the customer and at least one business object related to the new interaction; and updating the presentation of the user interface display pane to include representations of the new interaction and the at least one business object related to the new interaction.

According to one embodiment, the call comprises a communication of at least one of the following types: a telephone call, an email message, a social network communication, a video call, and a text message.

According to one embodiment, the call is received by a customer relationship management system.

According to one embodiment, the simultaneously presented representations of the interactions and the relevant business objects relating to the interactions are configured in at least one of user interface tabs and user interface tiles, including a parent tab that contains all of the user interface tabs and user interface tiles of the interactions and the relevant business objects.

According to one embodiment, the method further comprises presenting in the user interface display pane an assist area that includes representations of at least one of customer related content and context related content.

In another aspect, the invention relates to a system comprising: a computing device comprising: a communication interface; a memory storing processor-executable program code; and a processor to execute the processor-executable program code in order to cause the computing device to: receive a call from a customer; determine, in response to receiving the call, interactions with the customer and relevant business objects relating to the interactions; and present, simultaneously in a user interface display pane, representations of the interactions and the relevant business objects relating to the interactions.

In another aspect, the invention relates to a non-transitory computer-readable medium storing program code executable by a processor of a computing system, the medium comprising: program code to receive a call from a customer; program code to determine, in response to receiving the call, interactions with the customer and relevant business objects relating to the interactions; and program code to present, simultaneously in a user interface display pane, representations of the interactions and the relevant business objects relating to the interactions.

### BRIEF DESCRIPTION OF THE DRAWINGS

The construction and usage of embodiments will become readily apparent from consideration of the following specification as illustrated in the accompanying drawings, in which like reference numerals designate like parts, and wherein:
FIG. 1 illustrates aspects of an interaction center, according to some embodiments;
FIG. 2 is a block diagram overview of a process, according to some embodiments;
FIG. 3 is illustrates a layout of an interaction page, according to some embodiments;
FIG. 4 illustrates an overview of an interaction page, according to some embodiments;
FIGS. 5 - 13 illustrate various aspects of an interaction page, according to some embodiments;
FIG. 14 is a flow diagram of a process, according to some embodiments;
FIG. 15 is a flow diagram of a process, according to some embodiments;
FIG. 16 is a block diagram of a system according to some embodiments;
FIG. 17 is a block diagram of a platform for a telecommunication system; and
FIG. 18 is a flowchart of a method for controlling communication in the telecommunication system.

### DETAILED DESCRIPTION

The following description is provided to enable any person in the art to make and use the described embodiments. Various modifications, however, will remain readily apparent to those in the art.

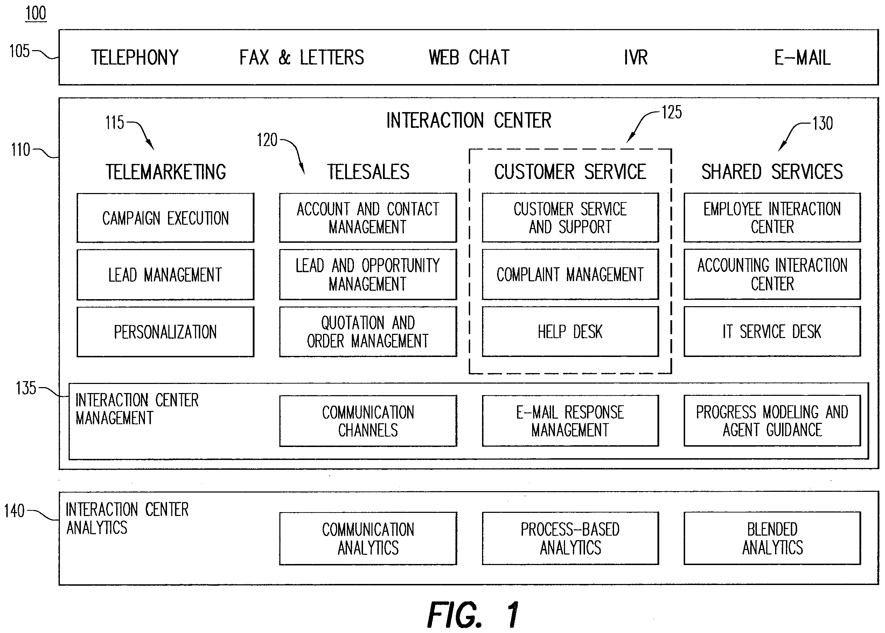

FIG. 1 illustrates aspects of an interaction center 100. Interaction center 100 may relate to a customer relationship management (CRM) system and/or service. Interaction center 100 may include a platform or infrastructure that facilitates communication and interaction between a customer and a service provider system. A customer may communicate with a user of the service provider system via one or more different communication channels 105. In some instances, the customer may use more than one of the communication channels at the same time or at least during a same communication session. Communication channels 105 may include any form of communication known or that becomes known, including but not limited to the examples illustrated in FIG. 1.

In some embodiments, interaction center 100 may relate to different functions. The functions supported by interaction center 100 may correspond to processes performed by an entity and can include, for example, the processes of customer service 125, and shared services 130 and the (sub-) process thereof. The functionalities may be supported and implemented by one or devices and systems including computers and processors executing program code or instructions that store and retrieve data from a memory.

In some embodiments, a process herein may be represented by a "business object" (BO) that is a modeled data structure. The data structure has fields with attributes and may have associated methods and queries that use those (or other) attributes as inputs or parameters in executing the associated methods and queries. As an example, the BO "customer" may have attributes such as "name", "mailing address", "billing address", etc.; the BO "service ticket" may have fields with attributes such as "related product", "issue", etc. In some aspects, a BO may be defined by metadata that describes the attribute fields. Furthermore, a business object herein may refer to a particular data set according to the data structure (i.e. an instance, instantiation, of the BO data structure). For example, interaction center 100 may generate a service ticket documenting an interaction between a particular customer and a company where the interaction includes a complaint of the customer regarding a specific product sold by the company that is experiencing a particular issue. As part of the interaction, a customer service representative of the company may provide a solution to the customer's particular issue in the form of a set of instructions attached to an email that is sent to the customer. The records of the interactions including the service ticket, the service complaint, the email sent to the customer, the document including the solution that is attached to the email. Etc. are particular instances of the BOs.

The functionalities or capabilities 110 illustrated in FIG. 1 are examples of some of the types of functions that can be supported by an interaction center herein and is not meant to be an exhaustive or limiting listing. In some instances herein, aspects of the present disclosure will be discussed using examples related to customer service capability 125, such as customer service and support and/or a help desk. However, some if not all of the aspects disclosed herein may be applicable to support and facilitate other and alternative capabilities of interaction center 100.

Interaction center 100 further includes capabilities to control and manage the interaction center, as illustrated by management functions 135. In some aspects, data relating interactions between a customer and the entity, including the processes, services, and functions impacted by the interaction may be analyzed using one or more analytical functions 140. The analysis may be performed in an effort to improve communication with customers, improve the processes that relate to interactions with customers, and a combination thereof.

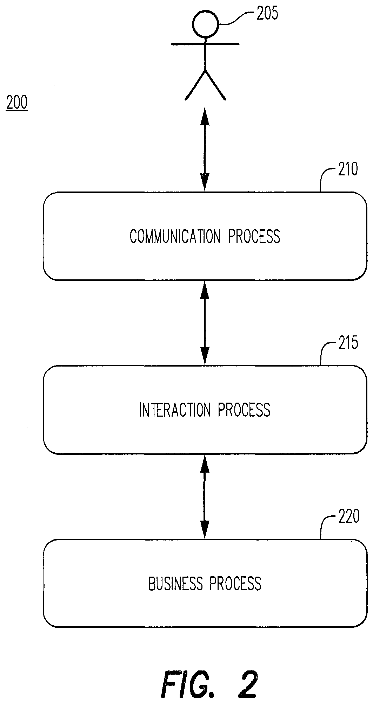

FIG. 2 is an illustrative overview of a process 200, according to some embodiments herein. Process 200 includes a customer 205 engaging in communicating with an entity in a communication session. Communication process 210 may be initiated by either one of the customer and the entity. The communication between the customer and the entity is not limited to a particular type of communication. Having established communication with each other at 210, customer 205 and the entity may interact to with each other to form or further a communication related to the operations of the entity (e.g. a customer service support call, etc.). In some embodiments, aspects of communication process 210 may be automatically handled by a computer system.

As represented by process 220, interaction process 215 may relate to or impact one or more processes of the entity. For example, a customer service call to a help desk may relate to numerous processes and the records associated with the impacted processes such as, for example, a customer record, a maintenance record, a customer support protocol, etc. In some embodiments, each of the processes and records may be represented as BOs stored in a database.

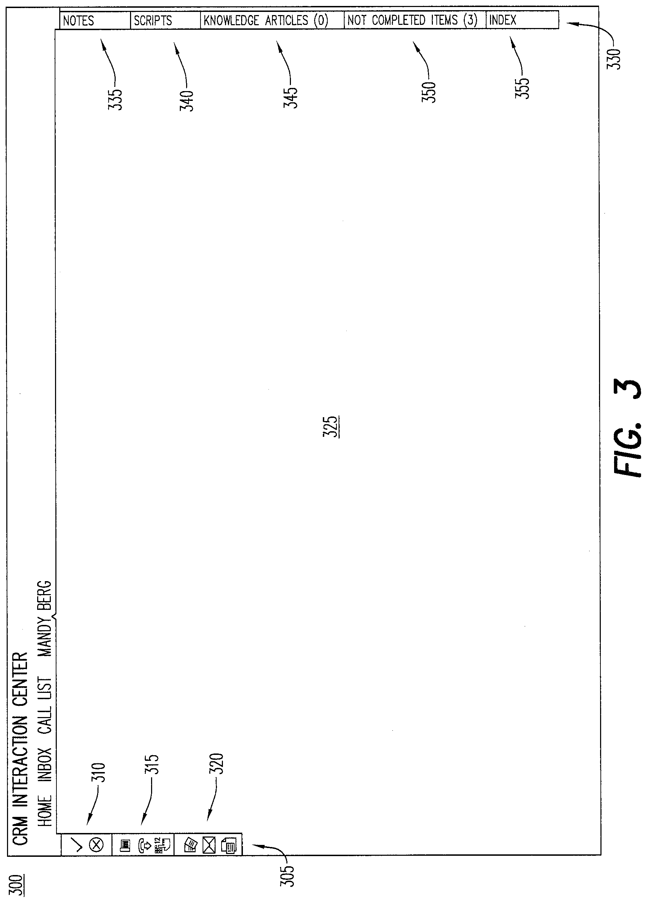

In accordance with some embodiments, FIG. 3 is an illustrative example of an interaction page 300 comprising a user interface. Interaction page 300 includes a control toolbar 305, a workspace 325, and an assist area 330. Interaction control toolbar 305 may include user interface elements such as icons that provide a mechanism for a user to selectively navigate, activate, and control the user interface elements of interaction page 300. Interaction control toolbar 305 includes interaction controls 310 to end and clear/cancel actions or tasks. Interaction control toolbar 305 also includes communication controls 315 that facilitate communicating with a customer. These controls include an icon to select a particular communication channel (e.g., email, telephone, social network, etc.), hang up/end a communication session, open a dial pad, etc. Interaction control toolbar 305 also includes, in the embodiment of FIG. 3, creation controls 320 that enable a user to create a service request, create an email message, draft a letter, etc.

Workspace 325 comprises a user interface display pane that provides an overview of an interaction and can include one or more representations of the interactions between, for example, a entity and a customer or client thereof, as well as representations of the relevant objects (BOs) relating to the interactions. Herein, the relevant business objects relating to the interactions refer to those business objects that pertain to the specific interaction(s) between the entity and the customer/client that are presented in the workspace. Accordingly, some embodiments herein may only present the representations of the business objects (e.g., graphical and/or textual) that directly related to or depend on the current interaction(s) displayed or presented in workspace 325. In some embodiments, the representations of the interactions and the relevant business objects are presented simultaneously in workspace 325. In this manner, the items presented in interaction page 300 may be displayed efficiently in a context-aware scenario, where a user need not navigate to a different screen or display to view or select relevant information pertaining to a current interaction as represented in the interaction page.

Assist area 330 of interaction page 300 includes user interface elements, controls or representations of customer related content and context related content. In the example of FIG. 3, assist area 330 includes user interface controls to open or select notes 335, scripts 340, knowledge articles 345 relating to interactions and processes depicted in the workspace, not completed tasks/open items 350, and an index of the business objects, interactions, and other aspects related to the items that may be displayed in workspace 325, which provides context for the displayed interaction(s).

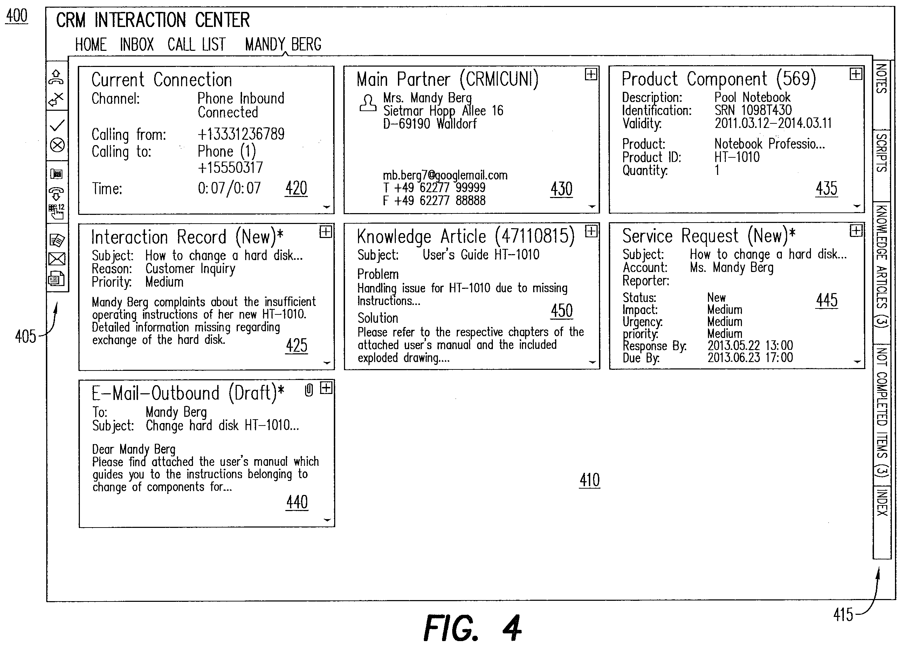

In some embodiments, an interaction page includes the main aspects of an interaction between different entities, such as a service provider system and a customer or client thereof. FIG. 4 is an illustrative example of an interaction page 400 that includes representations of both interactions and the corresponding, relevant business objects impacted by the interactions. According to the general layout of some embodiments of an interaction page, page 400 includes an interaction control toolbar 405, a workspace 410, and an assist area 415 that includes a plurality of user interface elements therein. Interaction page 400 further includes specific user interface element representations of interaction components (420, 425), identification components, (430, 435), and solutions related to the interactions (440, 445, 450). The interaction components 420 and 425 include information identifying the current communication or connection with the customer participating in the interaction and an interaction record including details of the current interaction, respectively. The identification components 430 and 435 include information identifying the user partner or owner and documents, products, or services relating to the interaction and the user partner, respectively. Regarding a solution for the issues concerning the current interaction, a communication to the customer such as outbound email 440 is shown in workspace 410, as well as an agent service request 445 initiated based on the current interaction and a knowledge article 450 containing information specific to the customer's specific issue being addressed in the current interaction.

Interaction page 400 conveniently and efficiently includes all of the pertinent and relevant information that relates to and/or is impacted by the current interaction in one user interface display pane. A user being presented with interaction page 400 may readily be informed of the various aspects of an interaction and the related business objects associated with the interaction with a particular customer. In some aspects, the user need not navigate to another user interface pane, application, or system in order to access information related to an interaction. As illustrated, features of the user interface representations of interactions and the relevant business objects include the various representations including summaries of the corresponding information. If desired, the full details of the information may be presented by a user selecting a user interface control element to expand the summary information. In some, if not all or most embodiments, the summary information is sufficient to provide the user with the information needed to effectively and efficiently manage the interaction with the customer. Accordingly, the extent of information included in the summaries may be customized in some embodiments.

Advantageously, some embodiments provide a technical solution to the technical problem of efficiently displaying needed information in a user interface display pane of an interaction page, where the relevant information related to a particular interaction is presented therein based on the parties involved in the interaction and the underlying business objects and context(s) of the interaction such that a user need not navigate to a separate display pane or application.

In some aspects, the processes and data modeled by and represented as business objects (BOs) may include the relationships associating the interactions and the documents, records, and other data thereto. The BOs may be maintained and managed by a database system. In some instances, the interaction pages herein may be BOs that dynamically present the appropriate corresponding documents, records, and other data relating to an interaction based on the underlying intelligence data captured and represented by the BOs.

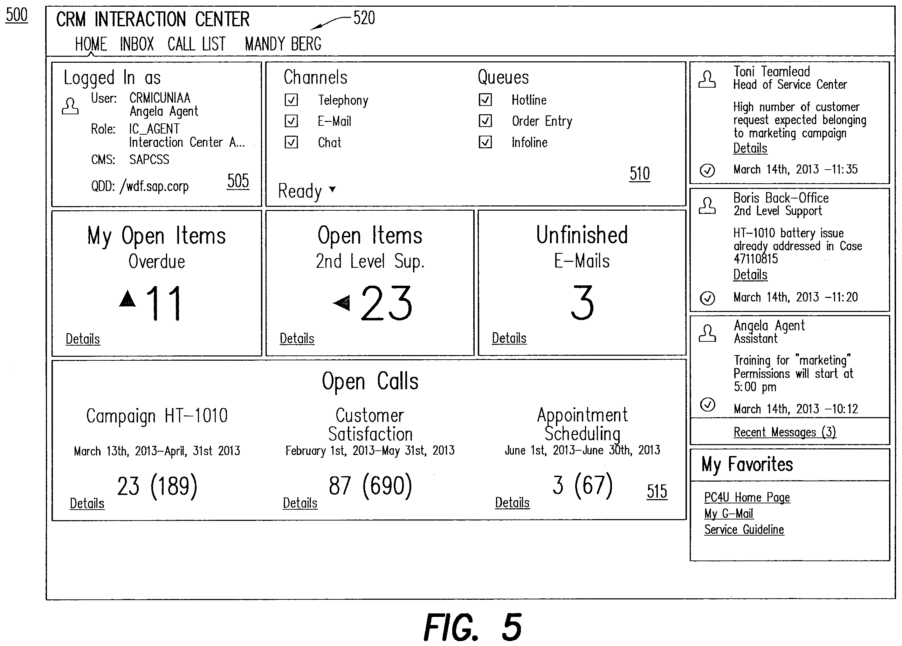

FIGS. 5 - 13 illustrate various aspects of an interaction page, according to some embodiments. For example, FIGS. 5 - 13 disclose, at least in part, the connections between interactions and the corresponding data elements impacted and related thereto, including different user interface elements. FIG. 5 illustrates interaction page 500 that may be presented to a user (e.g., a call center customer service representative's home page) between interactions with a customer or client. As illustrated, information regarding the call center customer service representative including their role(s) may be captured at 505. The communication channels used and the queues the call center customer service representative is responsible for may be displayed at 510. Additional information relating to the call center customer service representative may also be included, such as but not limited to the open calls for the call center customer service representative. Upon receiving a call from a customer, the customer's name or other identifying information obtained from the incoming call may be displayed at 520.

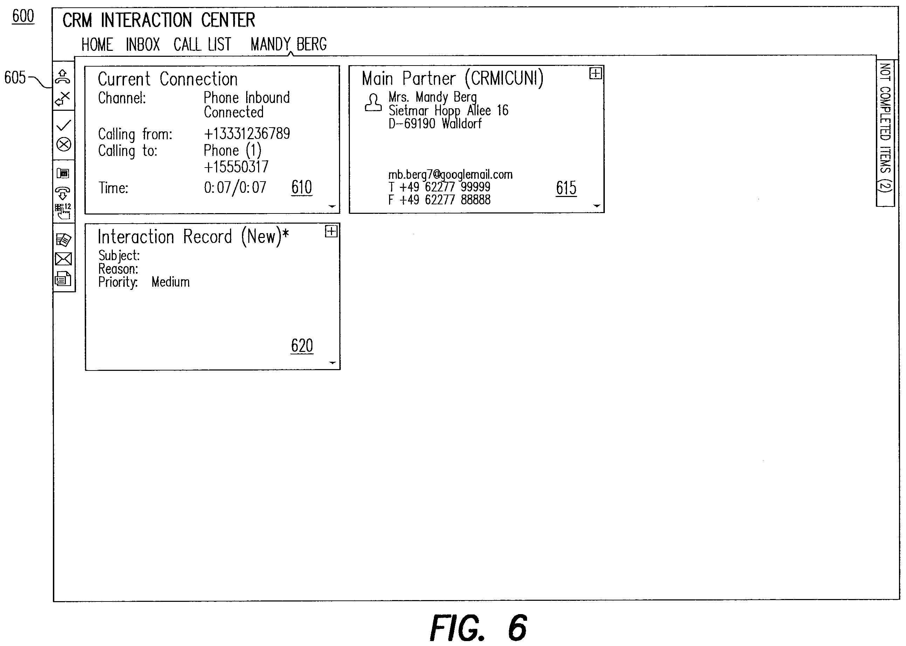

By accepting the incoming call, the call center customer service representative is presented with interaction page 600 of FIG. 6. The call may be accepted by the user selecting the user interface element/icon 605. Upon accepting the call, the user may be presented with the interaction representations 610, 615, and 620 that include the specific call data as obtained from the incoming call, the related user partner, and an interaction record to document the interaction. In the present example, it is noted that the interaction is new, thus a new record is created at 620. In some instances, an interaction may include a new or existing interaction, where accepting a call from an existing customer caller may cause a prior interaction record to be displayed in the interaction page. The account information is presented at 615 based on the caller's phone number and additional details may be viewed and accessed by expanding user interface representation 615.

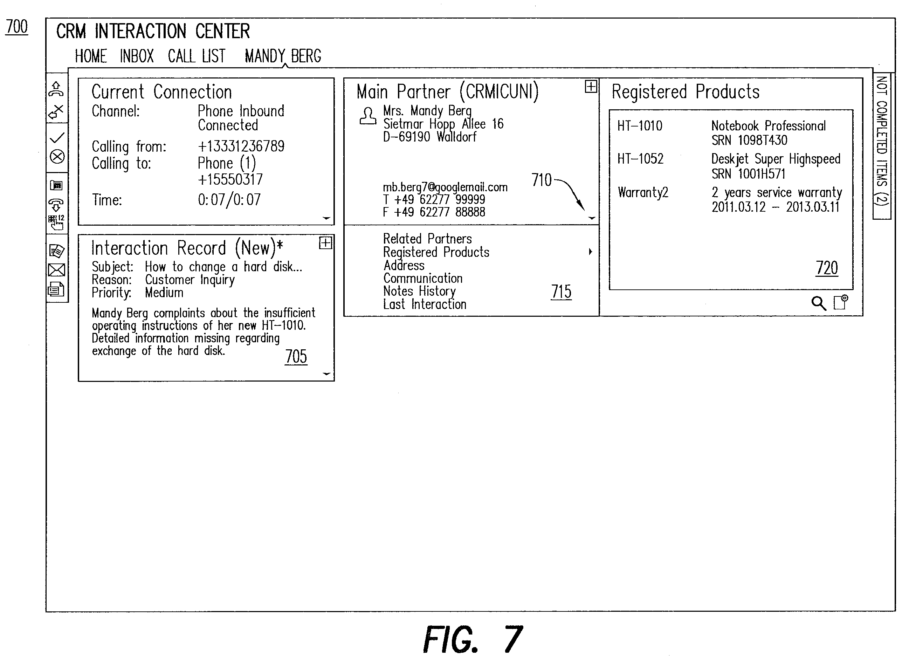

In the interaction page 700 shown in FIG. 7, the call center customer service representative/user may document aspects of the interaction by entering comments, including structured and/or unstructured data, directly into the interaction record at 705. In this manner, the user need not navigate to a separate user interface pane or application in order to enter comments. In some aspects, by selecting user interface element 710, the user may be presented with additional user interface elements at 715 that provide a mechanism for the user to have related information regarding the client displayed. For example, the user can selected "registered products" and in response thereto the products registered to the client may be displayed at 720. This and other information corresponding to the interactions with the client may be accessed and retrieved from a data store and presented in an interaction page by selection one or more of the categories at 715.

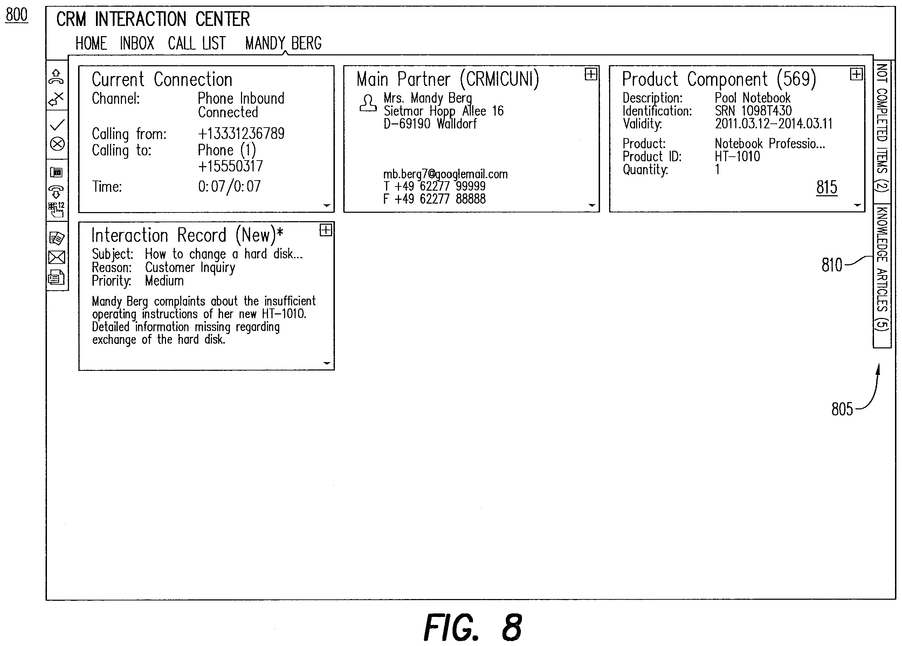

The user may select one of the products displayed at 720 to cause the interaction page 800 of FIG. 8 to be displayed. Furthermore, based on the user's input at 705 and the selection of a particular product at 720, which is now shown at 815, a possible solution to the customer's issue (e.g., a complaint regarding the specific product) may be indicated in assist area 805 at tab 810.

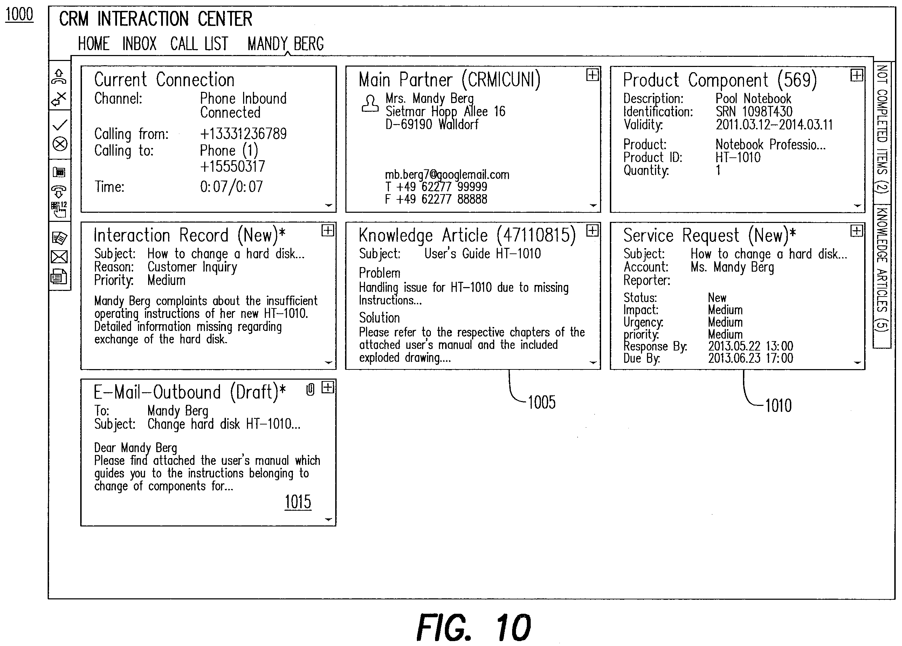

By selecting the "Knowledge Articles" tab 810, the user is presented with interaction page 900. Based on the user's selections, interaction page 900 includes, like the other instances of interaction pages herein, the relevant business objects representations impacted by the subject interaction(s). Accordingly, interaction page 900 includes a listing of the five different articles defined as being possible solutions to the customer's complaint issue at 905. Additionally, the user may create an agent service request for the current interaction by selecting user interface element 910. Upon creating the agent service request for the current interaction by selecting user interface element 910, interaction page 1000 of FIG. 10 may be presented to the user.

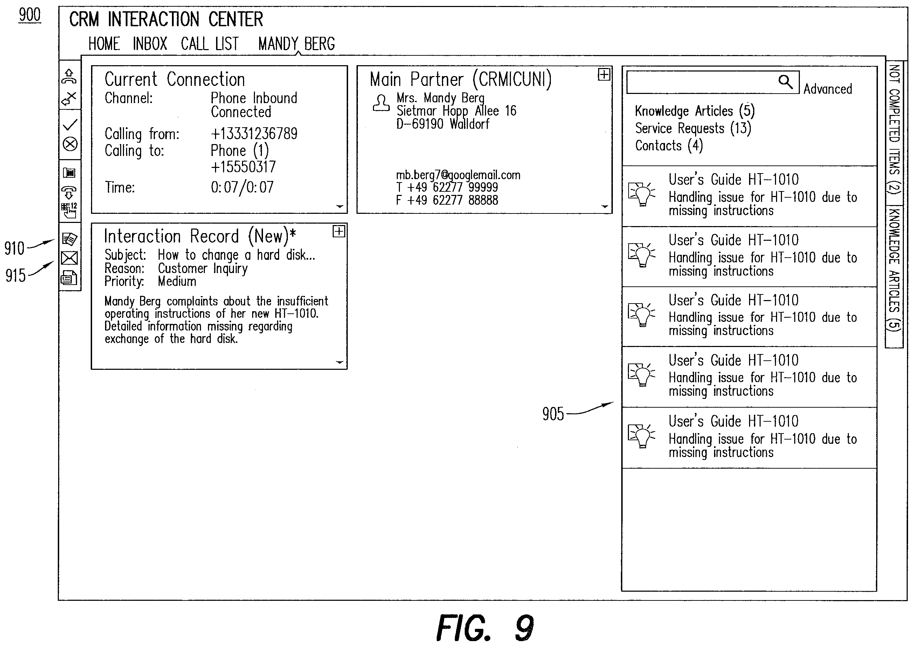

Interaction page 1000 includes a user interface representation 1005 of the previously selected knowledge article "471108815" that the user and the system determines to be most applicable to the customer's issue. Interaction page 1000 also includes a user interface representation 1015 of the newly created service request. It is noted that the user can, in some embodiments, enter key information directly into the newly created service request without a need to navigate to a separate display pane or application. Furthermore, by selecting user interface element 915 (create an email icon) of FIG. 9, an outgoing email may be automatically initiated as illustrated by the user interface element representation 1020. The email may, in some embodiments, automatically attach the associated knowledge article 1005, pre-populate certain fields (e.g., "To", "Subject", etc.) based on the known, related customer information. In some embodiments, the content of the email may be automatically derived, at least in part, based on the context interaction, including but not limited to the interaction record, the service request, the knowledge article, etc.

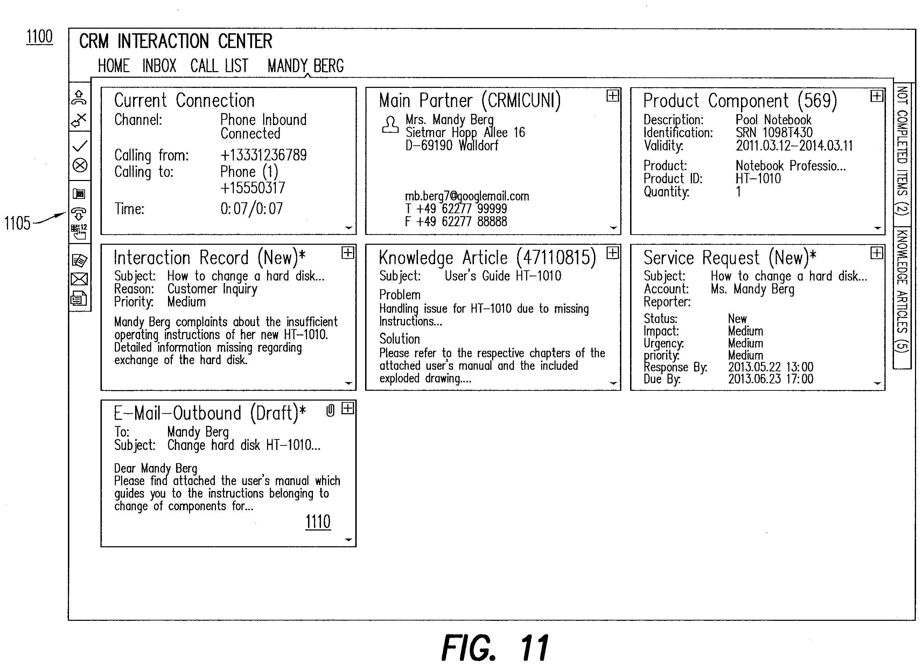

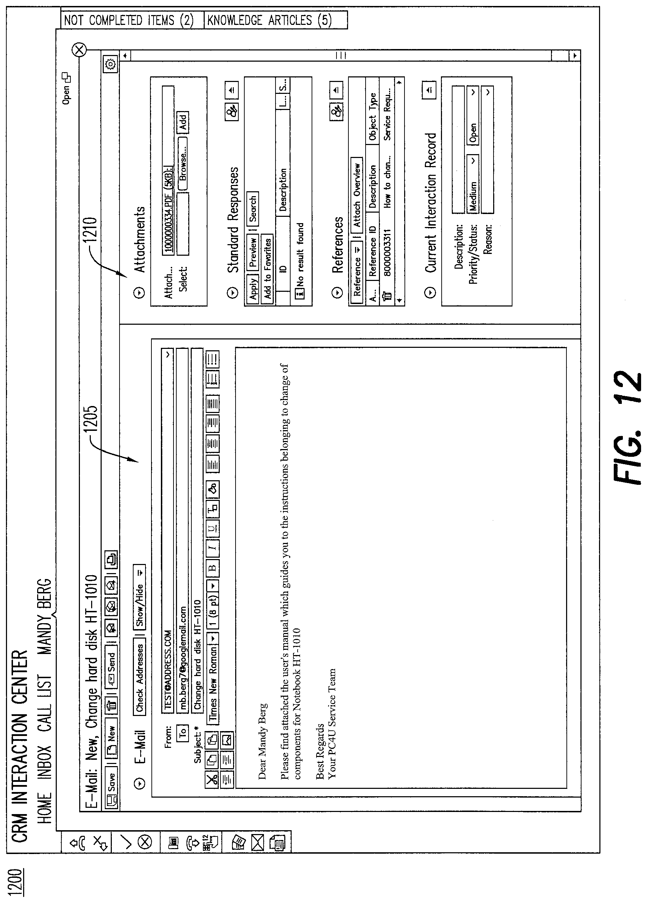

FIG. 11 includes a depiction of an interaction page 1100 that may be presented to a user as the user provides the determined solution to the customer, proceeds to end the call with the user, and ends the present interaction. The user may end the call by selecting the "hang up" user interface element/icon 1105. Upon ending the call, the user may send the email 1110 that includes the solution information to the customer. In some aspects, the user may cross check and/or finalize the email before sending it to the customer. In order to facilitate editing and finalization of the email, the interaction page may dynamically evolve to the configuration of interaction page 1200 illustrated in FIG. 12. As shown, interface page 1200 includes an expanded view of the email 1205 to be sent to the customer, including a display of the relevant information 1210 that may be used in drafting the email.

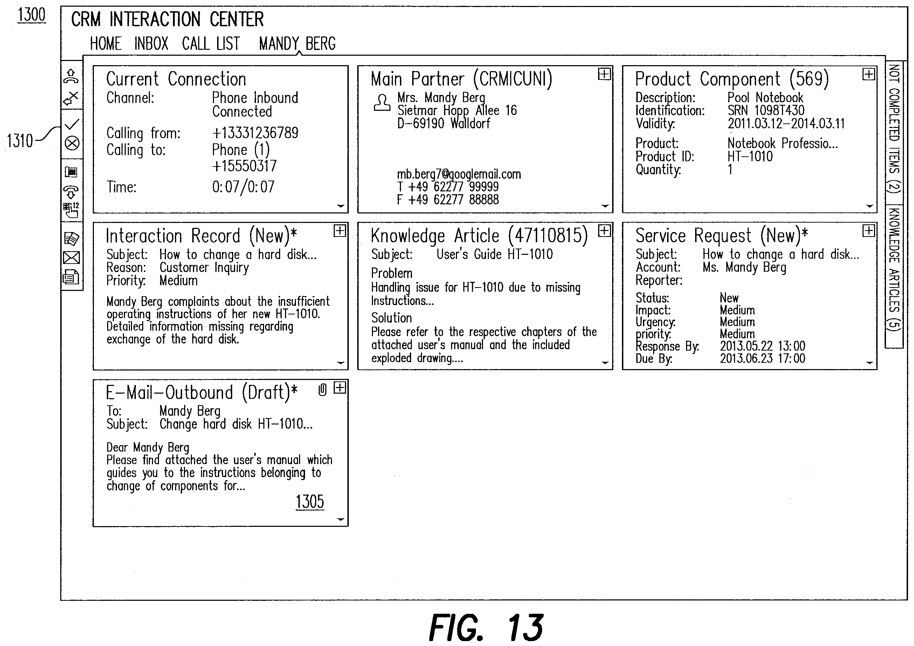

Upon finalization of the email, the email may be sent to the customer and interaction page 1300 of FIG. 13 can be presented to the user. As shown, a representation of the sent email is presented at 1305, including an identifier that the email has been sent to the addressed recipient(s). The interaction may thereafter be closed by selecting user interface element/icon 1310, wherein a record of the interaction including the email, service request, and other data created, modified, deleted, or otherwise impacted by the interaction is stored and indexed (if not already accomplished) for further retrieval, processing, and analysis.

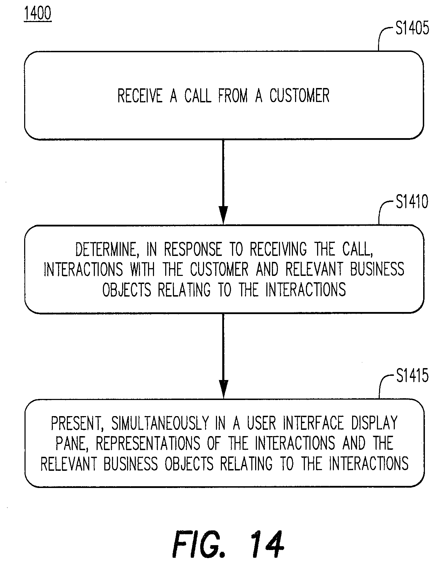

FIG. 14 is a flow diagram of process 1400, according to some embodiments. Process 1400 and the other processes described herein may be performed using a combination of hardware, software or manual means. Software embodying these processes may be stored by a non-transitory tangible medium, including a fixed disk, a floppy disk, a solid state drive, a CD, a DVD, a flash drive, or a magnetic tape. According to some embodiments, process 1400 is performed by a computing device such as computing device 1600 that will be described in greater detail hereinbelow.

Initially, a call may be received, by a user such as an entity, from a customer at operation S1405. In some aspects, the customer may be an existing customer having previous one or more interactions with the entity. In some instances, the call may be received from a prospective or new customer having no previous interactions with the entity. In some embodiments a call may be either an inbound call or an outbound call, wherein the call is "received" by a system facilitating management of calls, whether inbound or outbound.

In some aspects, the call includes a communication of at least one type. In some embodiments, the call may include at least one of a telephone call, an email message, a social network communication, a video call, and a text message.

At operation S1410, process 1400 proceeds to determine, in response to receiving the call, interactions with the customer and relevant business objects relating to the interactions. As stated hereinabove and demonstrated by the various embodiments of interaction pages illustrated in FIGS. 4 - 13, the impacted business objects may include documents, files, structured data, unstructured data, and processes that may be associated with other data and processes. In some embodiments, the impacted business objects may be modeled as BOs and instantiated as specific instances adhering thereto.

In some embodiments, the determining of the interactions and the relevant business objects may include referencing stored data for indications of the customer based on identifying information received in the call, determining prior interactions with the customer as indicated in the stored data, and determining the relevant business objects by referencing the stored data for business objects related to, for example, the customer and the prior interactions.

Flow of process 1400 continues to operation S1415 where representations of the interactions and the relevant business objects relating to the interactions are simultaneously presented in a user interface display pane. As disclosed herein, the user interface display pane may comprise a workspace (e.g., 325 in FIG. 3) of an interaction page. In some embodiments, the simultaneously presented representations of the interactions and the relevant business objects relating thereto are configured in at least one of user interface tabs and user interface tiles. Referring to FIG. 4, for example, the representations of the interactions and the relevant business objects relating thereto are configured as user interface tiles 420, 425, 430, 435, 440, 445, and 450. In some embodiments, the user interface tabs and user interface tiles of the interactions and the relevant business objects may be configured and contained within a parent tab. For example, an interaction page may possibly display multiple parent tabs or tiles, where each parent tile contains all of the user interface tabs and user interface tiles of the interactions and the relevant business objects relating to a specific call in the same parent tab or tile.

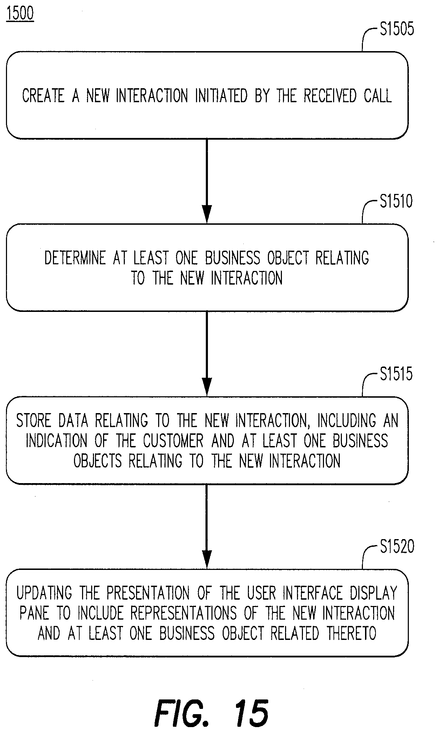

FIG. 15 is a flow diagram of process 1500, according to some embodiments. Process 1500 includes an operation S1505 of creating a new interaction that is initiated by a received call. In some instances a previous interaction may be continued but in the instance of process 1500 a new interaction is created. In response to the creation of the new response, at least one business object relating to the new interaction is determined at S1510. The business object may be determined from a plurality of functions supported and provided by an entity.

At operation S1515, the flow of process 1500 continues to store data relating to the new interaction. In some aspects, the stored data may include at least an indication of the customer and the at least one business object determined at operation S1510. Based on and in response to the stored data, the presentation of the user interface display pane of an interaction page may be updated at 1520. Updating of the display pane may include modifying the user interface elements presented therein to include new, modified, altered, alternative, and otherwise different user interface representations of the new interaction and the at least one business object relating thereto.

Embodiments are not limited to the illustrated operations and the foregoing description thereof.

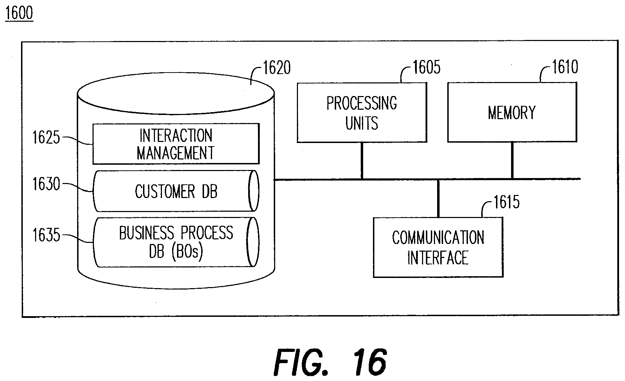

FIG. 16 is a block diagram of general-purpose or dedicated computing device 1600 according to some embodiments. Computing device 1600 may, for example, be operated by an entity executing a customer relationship management (CRM) system. Computing device 1600 includes processing units 1605 (e.g., processor cores and/or processing threads) configured to execute processor-executable program code or program instructions to cause device 1600 to operate as disclosed herein, and storage device 1620 for storing the program code or program instructions. Storage device 1620 may comprise one or more fixed disks, solid-state random access memory, and/or removable media (e.g., a thumb drive) mounted in a corresponding interface (e.g., a USB port).

Storage device 1620 stores program code of interaction management program 1625. Customer database 1630 includes database records describing the customers, existing and prospective customers (i.e., leads) that may be interacted with through services provided by computing device 1600. The database record for a customer may specify, for example, the customer's contact information (phone number, email, social network(s) username(s), etc.), including names, titles, responsibilities, date of first contact, date of last contact, preferred method of contact, demographic information, etc.

Business process database 1635 may include BOs representing processes supported, facilitated, and provided by the entity. In some regards, the BOs may represent data including but not limited to reports, records of interactions, product registrations, service requests, knowledge articles and other product or service support documents, processes for processing claims, etc.

In some embodiments, database 1635 may comprise one or more systems to store data. The data stored in database 1635 may be received from disparate hardware and software systems, some of which are not interoperational with one another. The systems may comprise a back-end data environment employed in an industrial context. The data may be pushed to database 410 and/or provided in response to queries received therefrom.

In some embodiments, database 1635 may be implemented in Random Access Memory (e.g., cache memory for storing recently-used data) and one or more fixed disks (e.g., persistent memory for storing the full database). Alternatively, database 1635 may implement an "in-memory" database, in which volatile (e.g., non-disk-based) memory (e.g., Random Access Memory) is used both for cache memory and for storing the full database. In some embodiments, the data of the full database may comprise one or more of conventional tabular data, row-based data, column-based data, and object-based data. Database 1635 may also or alternatively support multi-tenancy by providing multiple logical database systems which are pro-grammatically isolated from one another. Moreover, the data of database 1635 may be indexed and/or selectively replicated in an index.

The program code of interaction program 1625 may be transferred to memory 1610 for execution by processing units 1605 to record interactions with a customer and to determine the relevant business objects impacted by the interactions between the customer and the entity. Furthermore, the program code may be executed by the processing units to present the interaction pages herein in a manner (i.e., flow) and a configuration as disclosed herein. Communication interface 1615 may be used to communication the interaction pages to a suitable display device, as well as receive and send communications from and to the customer. Computing device 1600 may perform functions other than those attributed thereto herein, and may include elements which are necessary for the operation thereof.

The foregoing diagrams represent logical architectures for describing processes according to some embodiments, and actual implementations may include more or different components arranged in other manners. Other topologies may be used in conjunction with other embodiments. Moreover, each system described herein may be implemented by any number of devices in communication via any number of other public and/or private networks. Two or more of such computing devices may be located remote from one another and may communicate with one another via any known manner of network(s) and/or a dedicated connection. Each device may include any number of hardware and/or software elements suitable to provide the functions described herein as well as any other functions. For example, any computing device used in an implementation of some embodiments may include a processor to execute program code such that the computing device operates as described herein.

All systems and processes discussed herein may be embodied in program code stored on one or more non-transitory computer-readable media. Such media may include, for example, a floppy disk, a CD-ROM, a DVD-ROM, a Flash drive, magnetic tape, and solid state Random Access Memory (RAM) or Read Only Memory (ROM) storage units. Embodiments are therefore not limited to any specific combination of hardware and software.

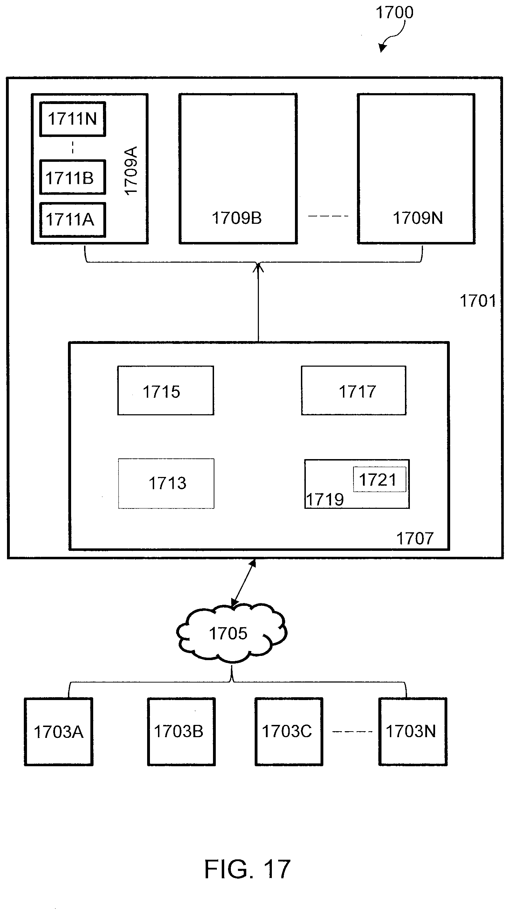

FIG. 17 is a block diagram of a platform for a telecommunication system 1700. The telecommunication system 1700 comprises a call center (or computer system) or communication center 1701. The call center 1701 may be in communication with one or more user devices 1703A-N via at least one network 1705. The at least one network 1705 may comprise, for example, a public switched telephone network (PSTN), a local area network (LAN), a wide area network (WAN) and/or a public network such as internet.

The call center 1701 may be a centralized answering arrangement for communication with the user devices 1703A-N.

The user device 1703A-N may comprise a telephone and/or a user computing device. The user computing device may comprise personal computers, laptop devices, mobile communication devices, tablet computers, smart phones, or various other computing devices.

The call center 1701 comprises a server 1707 that selectively routes calls and/or online communications from user devices 1703A-N to telecommunication devices 1709A-N based on defined routing criteria. For example, a routing criterion may represent a threshold above which a number of calls served by a user-ID associated with a telecommunication device 1709B during a predefined time interval is a trigger condition to adopt an alternate routing for the call to a second telecommunication device 1709C. In another example, the routing criterion may comprise second routing criterion representing a presence status of the user associated with the telecommunication device 1709A-N.

A telecommunication device 1709A-N may comprise a computer, smartphone, tablet, laptop etc. In another example, the telecommunication device 1709A-N may be a display device. The call center 1701 may use various communications means including a telephone, chat texting and social medias etc.

The server 1707 may comprise a call control server and/or a web server. The server 1707 may comprise a phone connection module 1713 used to receive calls placed by a phone unit 1703A. The server 1707 may further comprise a computer connection module 1715 used to receive (VoIP) calls placed using an Internet voice terminal (VoIP). The server 1707 comprises a processor 1717 and a memory 1719.

The server 1707 may further include software and systems for identifying the user that has performed a call to the server 1707. The server 1707 may further include a database for storing signaling data related to the user devices 1703A-N.

Memory 1719 may comprise a first application 1721. The first application 1721 comprises instructions that when executed by the processor causes the processor to display on display devices of the telecommunication devices 1709A-N one or more graphical user interfaces 1711A-N.

For example, the first application 1721 may be executed upon receiving a communication session initial signal e.g. a call from user device 1703A-N by the server 1707.

The signaling data can include a name field that stores the name of an owner of the user device 1703A-N and an account number or identification number of the user device 1703A-N. The signaling data may also include other information or additional fields.

The term "server" refers to a computer hardware and/or software that communicates with other electronic devices through a network. The server may comprise a computer server such as a web server.

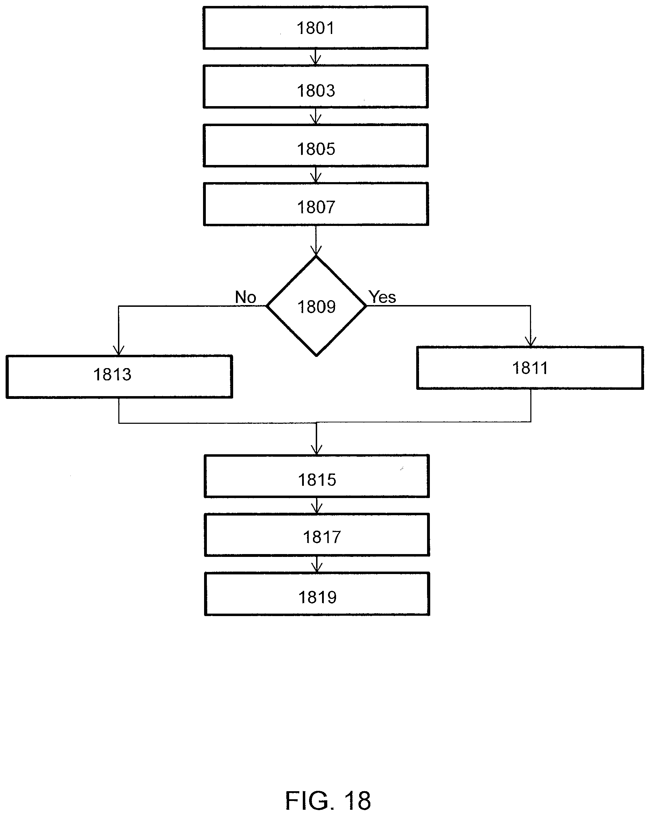

The operation of the telecommunication system 1700 will be described in detail with reference to FIG. 18.

FIG. 18 is a flowchart of a method for controlling communication in the telecommunication system 1700. For example, the method may operate call center 1701 in order to reduce handle time in call center 1701.

A handle time is the duration of one transaction/communication session during which an operator or user of a telecommunication device 1709A-N handles a call and/or online communication (and/or other used communication means) from start to finish of the call and/or online communication (and/or other used communication means).

In step 1801, the call center 1701 may receive at the server 1707 a first communication session initiation signal from a user device 1703A of the user devices 1703A-N via network 1705. A communication session initiation signal may be a signal (e.g., data packet, electrical or electromagnetic pulse, etc.) that provides an indication that a communication session can be initiated (or a communication session is requested).

The first communication session initiation signal is received for establishing a first communication session between the user device 1703A and the call center 1701. A communication session may, for example, be an aural or voice communication session such as a telephonic communications session (such as a telephone call over PSTN, a voice over Internet protocol ("VoIP") communications session, or text, voice and/or video chat session via network 1705 that comprises internet.

The first communication session initiation signal may comprise a phone call, email, VoIP call, SMS etc. For example, the server 1707 may receive a phone call from phone unit 1703A via PSTN 1705. In another example, the server 1707 may receive an email and/or SMS via internet 1705.

For example, upon receiving the first communication session initial signal, the first application 1721 may be executed and a single first graphical user interface 1711A (e.g. interaction page 300 of FIG.3) of the one or more graphical user interfaces 1711A-N may be displayed in a given telecommunication device e.g. 1709A of the telecommunication devices 1709A-N. The (given) telecommunication device 1709A may be randomly chosen.

In another example, the telecommunication device 1709A may be selected by:
1. determining a distance between the user device 1703A that has sent the first communication session initiation signal and each of the telecommunication devices 1703A-N. For example, the distance may be calculated based on an IP address of the user device 1703A. The IP address may be used to define the geographical location of the user device 1703A. In another example, the first communication initiation signal may indicate the location of the user device 1703A. In a further example, the geographical location of the user device 1703A may be received and stored at the server 1707 and/or at each telecommunication device 1709A-N.
2. selecting the telecommunication device 1703A as having the shortest distance to the user device 1703A.

The communication via the shortest distance may further reduce the handle time compared to longer distance communications.

In step 1803, the server 1707 may determine signaling data indicative of the user device 1703A using a communication protocol of the network 1705 via which the first communication session initiation signal is received. The communication protocol may, for example, comprise IP protocol, Voice Over Internet Protocol (VOIP), Signaling System 7 protocol, File Transfer Protocol (FTP) etc.

For example, the signaling data may comprise an IP address of the user device 1703A in case the first communication session initiation signal is received via internet. The IP address may, for example, be extracted from data packets forming the first communication session initiation signal. The signaling data may further comprise the geographical location of the user device 1703A. The signaling data may further comprise history data (e.g. from previous communications) indicative of the user device 1703A and/or previous communications. The signaling data may further indicate (e.g. for VOIP or Web Real Time Communication (WebRTC)) the type of the user device 1703A e.g. smartphone or computer etc. browser version, browser language and/or the OS running on the user device 1703A, which may be used in order to decide which kind of communication session can be initiated with the user device 1703A. In another example, the signaling data may indicate the phone number of the user device in case the first communication session initiation signal is a phone call. The signaling data may further comprise the geographical location, operating device (PC, smartphone), browser version, browser language, operating system language or information collected by programs that run on the user's device 1703A.

The signaling data may further indicate the first communication session. For example, the signaling data may indicate a type of the first communication session that is wished by the user device 1703A. The signaling data may further indicate other communications means that are supported by the user device 1703A (i.e. the user device 1703A may communicate via the other communication means with the call center), which may be obtained from history data of the user device 1703A and/or from the first communication session initiation signal that indicates those supported communication means by the user device 1703A.

In step 1805, a first set of user interface elements may be displayed on the single first graphical user interface 1711A. The display of the first set of user interface elements may be performed by the server 1707, by for example, using the telecommunication device 1709A as a display device of the server 1707. In another example, the display of the first set of user interface elements may be performed by the telecommunication device 1709A upon receiving instructions (a command or control signal) that when executed on a processor of the telecommunication device 1709A cause the processor of the telecommunication device 1709A to display the first set of user interface elements.

For example, if there are multiple graphical user interfaces 1711A-N that are to be displayed by the first application 1721, only the single first graphical user interface 1711A may be used and the other graphical user interfaces of the multiple graphical user interfaces 1711A-N may be discarded e.g. after being displayed. This may have the advantage that the present method may be seamlessly integrated with existing systems that use or display multiple graphical user interfaces in order to setup and process a communication with users.

The term "graphical user interface" or "user interface" as used herein refers to an interface generated by a program for display on a display screen of a device with selectable user interface elements.

The term "user interface element" as used herein may be understood as a user interface object, or a set of user interface objects, displayed on a display screen of a device. A user interface element comprises a button, a text box, a tab, an icon, a text field, a pane, a check-box item, a menu bar, a title bar, an action bar or item group or the like. A user interface element may likewise be an image, a displayed alphanumeric character or any combination thereof.

The first set of user interface elements may indicate the signaling data as shown for example in box 420 FIG. 4. The first set of user interface elements may further indicate communication means (that are indicated by the signaling data) comprising at least an indication of the first communication session. For example, in case the first communication session is requested or initiated by a phone call a user interface element of the first set of user interface elements may indicate the first communication session using an image or text representing a telephone. A communication mean may for example enable a telephonic communications session such as a telephone call over PSTN, a VoIP communications session, or text, voice and/or video chat session via a data communications network such as internet. The first set of user interface elements may further comprise a user interface element comprising an image or text that indicates a VoIP communication mean.

The server 1707 may determine, using for example, the signaling data, that the user device 1703A that has sent the first communication session initiation signal may support other communication means than the communication mean of the first communication session (e.g. the one requested by the first communication session initiation signal) such as VoIP communication or a chat communication etc. For example, although the first communication session initiation signal may comprise a phone call, the user device 1703A may also be able to communicate via a chat session etc.

Displaying or providing supported or available communication means may have, for example, the advantage of enabling usage of the communication means that has a faster data transfer rate than the one initiated or requested by the user device 1703A. This may further reduce the handle time in the telecommunication system 1700. For example, the first set of user interface elements may further indicate the data transfer rate of each displayed communication means. The data transfer rates may be determined or estimated at the time of receiving the first communication session initiation signal, as this may provide reliable and up-to-date information for selecting one of the communication means. For example, the data transfer rate may be calculated or estimated by calculating the time for dummy data (of a given size) to make a round trip via a given communication means. In another example, the data transfer rate may be determined using data indicative of the communication means which is received and stored locally e.g. at the server 1707.

In step 1807, a selection via the single first graphical user interface 1711A of a communication mean of the (displayed or indicated) communication means may be received at the telecommunication device 1709A which displays the single first graphical user interface 1711A. For example, a user of the telecommunication device 1709A may use e.g. a mouse click on an icon that represents or indicates the selected communication mean in order to select that communication means. In another example, the telecommunication device 1709A may be equipped with a touch screen displaying different icons on the single first graphical user interface 1711A. The icons are each associated with a communication mean. The selection of the communication mean is received in response to or after the user's touch gesture of an icon corresponding to the selected communication mean.

If the selected communication mean corresponds to the first communication session that is requested via the received first communication session initiation signal, inquiry 1809, the first communication session may be established or initiated with the user device 1703A by the telecommunication device 1709A (or the server 1707 if the selected communication means is received by or forwarded to the server by the telecommunication device 1709A-N) according to the received first communication session initiation signal step 1811. Otherwise a second communication session may be established by the telecommunication device 1709A with the user device 1703A using the signaling data, step 1813. For example, a telephone call via a telephony network or a VoIP call can be initiated with the user device 1703A.

For example, an owner of the user device 1703A may be registered at the call center e.g. at the server 1707 or at each of the telecommunication devices 1709A-N. For example, the owner may be the first user that has registered the user device 1703A with the call center.

For example, in case the established communication session is a voice communication session, the telecommunication device 1709A may send via the established communication session a request for a vocal signal reciting at least one predefined term, such that the telecommunication device 1709A may authenticate the user of the user device 1703A by comparing the received vocal signal of the user of the user device 1703A to a registered digital voiceprint of the owner. In another example, in case the established communication session is a video communication session, the telecommunication device 1709A may capture an image of the user of the user device 1703A; and may authenticate the user of the user device 1703A by comparing the captured image with a registered fingerprint image of the owner. However, in case of an unsuccessful authentication of the user of the user device 1703A the established communication session may be closed by the telecommunication device 1709A i.e. following method steps 1809-1819 may not be performed. This may prevent a malicious use e.g. of stolen user devices.

Steps 1807-1819 may alternatively be performed by the server 1707. In this case, for example, upon receiving data at the telecommunication device 1709A, the data is automatically forwarded by the telecommunication device 1709A to the server 1707 in order to perform by the server a step of steps 1807-1819 that requires data received at the telecommunication device 1709A.

In step 1809, the telecommunication device 1709A may receive a service request from the user device 1703A via the established communication session. The service request may for example comprise a request for an electronic document that is stored on the server 1707. In another example, the service request may comprise a request for configuration data of the user device 1703A etc.

In step 1811, the telecommunication device 1709A-N may determine using the service request at least one second application for generating response data in response to the service request. The second application may be controlled or executed for generating the response data. For example, the second application may comprise instructions that when executed display a graphical user interface that e.g. provides access to the requested electronic document or that displays the requested configuration data of the user device 1703A. The second application may be configured such that the graphical user interface of the second application is not displayed and the output of the second application that is displayed on the graphical user interface of the second application may be redirected or displayed on the single first graphical user interface. For example, the configuration data of the user device 1703A may be displayed on the single first graphical user interface instead of the graphical user interface of the second application.

In step 1813, a second set of user interface elements may be displayed on the single first graphical user interface 1711A. The second set of user interface elements may indicate the response data and the second application. For example, the response data may be displayed in the form of text or images on the single first graphical user interface 1711A e.g. as shown in box 450 of FIG. 4. The display of the second set of user interface elements may comprise configuring the first and/or second set of user interface elements for displaying the first and second set of user interface elements on a number of display pages of the first graphical user interface that is smaller than a maximum allowed number of display pages. This may, for example, be done by choosing a given font size, smaller boxes or different user interface elements such that both the first and second set of user interface elements fit within a single display page.

The display of the first and/or second set of user interface elements may be performed so as to reduce user interaction time with the single first graphical user interface. This may, for example, be done by placing user interface elements (e.g. widgets) that are supposed to be hit sequentially near each other. For example, if the response data indicates an ordered list of responses that have to be selected one after the other, the user interface elements that represent or indicate the responses may be placed near each other. In addition or alternatively since better color schemes and contrast ratios are easier to read the present method may select a predefined set of colors (e.g. Black text on a white background provides maximal value contrast and, therefore, optimal readability for body text.) and contrast to be used in order to reduce the reading speed of the information displayed on the single first graphical user interface 1711A. This may further reduce the handle time.

In step 1815, the telecommunication device 1709A may receive a selection of at least part of the response data via the single first graphical user interface, and may send in step 1817 the selected response data to the user device 1703A. In step 1819, the telecommunication device 1709A may close (or end) the established communication session.

## Claims

1. A telecommunication method for controlling communication in a telecommunication system (1700), the telecommunication system (1700) comprising a call center (1701), the call center (1701) comprising a server (1707) communicating with at least one telecommunication device (1709A-N), the server (1707) comprising a processor (1717) and a memory (1719), the memory (1719) storing a first application (1721) comprising instructions that, when executed by the processor (1717), causes the processor (1717) to display on a display device of the telecommunication device (1709A) at least a first graphical user interface (1711A, 300, 400), the method comprising:
- receiving a first communication session initiation signal via a first network (1705) from a user device (1703A), wherein the user device (1703A) is operable to connect to the server via at least the first network (1705);
- determining signaling data indicative of the user device (1703A) using a communication protocol of the first network (1705) and the first communication initiation signal, the signaling data further indicating the first communication session and other communication means supported by the user device (1703A);
- displaying on the first graphical user interface (1711A, 300, 400) a first set of user interface elements (420, 405, 430) indicative of the signaling data, the first set of user interface elements (405) further indicating communication means comprising an indication of the first communication session and the other communication means;
- receiving a selection via the first graphical user interface (1711A, 300, 400) of one of the communication means;
- in response to receiving the selection of the communication means:
▪ establishing the first communication session with the user device (1703A) according to the received first communication session initiation signal, or
▪ establishing a second communication session with the user device (1703A) using the signaling data;
- receiving a service request from the user device (1703A) via the established communication session;
- determining using the service request at least one second application for generating response data in response to the service request;
- controlling the second application for generating the response data;
- displaying on the first graphical user interface (1711A, 300, 400) a second set of user interface elements indicative of the response data and the second application, wherein displaying comprises configuring the first and/or second set of user interface elements for displaying the first and second set of user interface elements on a single display page of the first graphical user interface (1711A, 300, 400);
- receiving a selection of the response data via the first graphical user interface (1711A, 300, 400);
- sending the selected response data to the user device; and
- closing the established communication session,
- the displaying on the first graphical user interface of the second set of user interface elements comprising: configuring the second application for preventing the display of graphical user interfaces by the second application, and redirecting outputs of the second application to be displayed on the prevented graphical user interfaces to the first graphical user interface to be displayed using the second set of user interface elements.

2. The method of any of the preceding claims, wherein the instructions when executed by the processor, further cause the processor to display on the display device of the telecommunication device a second graphical user interface, wherein the displaying of the first set of user interface elements comprises discarding the second graphical user interface.

3. The method of any of the preceding claims, wherein the server is connected to multiple telecommunication devices, wherein the displaying on the first graphical user interface comprises:
- determining a distance between the user device and each of the telecommunication devices;
- selecting the telecommunication device having the smallest distance from the multiple telecommunication devices.

4. The method of any of the preceding claims, the sending of the response data comprising:
- selecting one of the communication means having a faster data transfer rate;
- sending the response data using the selected communication means.

5. The method of any of the preceding claims, wherein an owner of the user device is registered at the call center, wherein the established communication session is a voice communication session, the establishing further comprising:
- sending via the established communication session a request for a vocal signal reciting at least one predefined term by a user of the user device;
- authenticating the user by comparing the received vocal signal of the user to a registered digital voiceprint of the owner.

6. The method of any of the preceding claims 1-4, wherein an owner of the user device is registered at the call center, wherein the established communication session is a video communication session, the establishing further comprising:
- capturing an image of a user of the user device suing the established communication session;
- authenticating the user by comparing the captured image with a registered fingerprint image of the owner.

7. The method of claim 6 or 5, further comprising: in case of an unsuccessful authentication of the user closing the established communication session.

8. The method of claim 6 or 5, wherein the established communication session is the second communication session, the method further comprising in case of a successful authentication of the user closing the establishing second communication session and establishing the first communication session.

9. The method of any of the preceding claims, wherein configuring the first and second set of user interface elements comprises: using a first color scheme for the first set of user interface elements for decreasing visibility of the first set of user interface elements.

10. The method of claim 9, further comprising using a second color scheme for the second set of user interface elements for enhancing visibility of the second set of user interface elements.

11. The method of any of the preceding claims, further comprising caching the signaling data and/or data indicating the service request and using the cached data for responding subsequent service requests by the user device.

12. A computer program product comprising computer executable instructions to perform the method steps of the method of the preceding claims.

13. A telecommunication system comprising a call center, the call center comprising a server communicating with at least one telecommunication device, the server comprising a processor and a memory, the memory storing a first application comprising instructions that, when executed by the processor, causes the processor to display on a display device of the telecommunication device at least a first graphical user interface, wherein the telecommunication system is operable to execute the method as claimed in one of the pre-ceding claims 1-11.

## Patentansprüche

1. Telekommunikationsverfahren zum Steuern einer Kommunikation in einem Telekommunikationssystem (1700), wobei das Telekommunikationssystem (1700) eine Anrufzentrale (1701) umfasst, wobei die Anrufzentrale (1701) einen Server (1707) umfasst, der mit mindestens einer Telekommunikationsvorrichtung (1709A-N) kommuniziert, wobei der Server (1707) einen Prozessor (1717) und einen Speicher (1719) umfasst, wobei der Speicher (1719) eine erste Anwendung (1721) speichert, die Befehle umfasst, die bei ihrer Ausführung durch den Prozessor (1717) bewirken, dass der Prozessor (1717) auf einer Anzeigevorrichtung der Telekommunikationsvorrichtung (1709A) zumindest eine erste grafische Benutzeroberfläche (1711A, 300, 400) anzeigt, wobei das Verfahren umfasst:
- Empfangen eines Initiierungssignals für eine erste Kommunikationssitzung über ein erstes Netz (1705) von einer Benutzervorrichtung (1703A), wobei die Benutzervorrichtung (1703A) in der Lage ist, sich über zumindest das erste Netz (1705) mit dem Server zu verbinden;
- Bestimmen von Signalisierungsdaten, welche die Benutzervorrichtung (1703A) angeben, unter Verwendung eines Kommunikationsprotokolls des ersten Netzes (1705) und des ersten Kommunikationsinitiierungssignals, wobei die Signalisierungsdaten ferner die erste Kommunikationssitzung und andere Kommunikationseinrichtungen, die von der Benutzervorrichtung (1703A) unterstützt werden, angeben;
- Anzeigen eines ersten Satzes von Benutzeroberflächenelementen (420, 405, 430), welche die Signalisierungsdaten angeben, auf der ersten grafischen Benutzeroberfläche (1711A, 300, 400), wobei der erste Satz von Benutzeroberflächenelementen (405) ferner eine Kommunikationseinrichtung, die eine Angabe der ersten Kommunikationssitzung umfasst, und die andere Kommunikationseinrichtung angibt;
- Empfangen einer Auswahl einer der Kommunikationseinrichtungen über die erste grafische Benutzeroberfläche (1711A, 300, 400);
- als Reaktion auf den Empfang der Auswahl der Kommunikationseinrichtung:
▪ Einrichten der ersten Kommunikationssitzung mit der Benutzervorrichtung (1703A) gemäß dem empfangenen Initiierungssignal für die erste Kommunikationssitzung oder
▪ Einrichten einer zweiten Kommunikationssitzung mit der Benutzervorrichtung (1703A) unter Verwendung der Signalisierungsdaten;
- Empfangen einer Dienstanfrage von der Benutzervorrichtung (1703A) über die eingerichtete Kommunikationssitzung;
- Bestimmen mindestens einer zweiten Anwendung zur Erzeugung von Antwortdaten als Reaktion auf die Dienstanfrage unter Verwendung der Dienstanfrage;
- Steuern der zweiten Anwendung zur Erzeugung der Antwortdaten;
- Anzeigen eines zweiten Satzes von Benutzeroberflächenelementen, welche die Antwortdaten und die zweite Anwendung angeben, auf der ersten grafischen Benutzeroberfläche (1711A, 300, 400), wobei das Anzeigen das Konfigurieren des ersten und/oder des zweiten Satzes von Benutzeroberflächenelementen für eine Anzeige des ersten und des zweiten Satzes von Benutzeroberflächenelementen auf ein und derselben Anzeigeseite der ersten grafischen Benutzeroberfläche (1711A, 300, 400) umfasst;
- Empfangen einer Auswahl der Antwortdaten über die erste grafische Benutzeroberfläche (1711A, 300, 400);
- Senden der ausgewählten Antwortdaten an die Benutzervorrichtung; und
- Schließen der eingerichteten Kommunikationssitzung,
- wobei das Anzeigen des zweiten Satzes von Benutzeroberflächenelementen auf der ersten grafischen Benutzeroberfläche umfasst: Konfigurieren der zweiten Anwendung, um eine Anzeige grafischer Benutzeroberflächen durch die zweite Anwendung zu verhindern, und Umlenken von Ausgaben der zweiten Anwendung, die auf den verhinderten grafischen Benutzeroberflächen angezeigt werden sollten, auf die erste grafische Benutzeroberfläche, um sie unter Verwendung des zweiten Satzes von Benutzeroberflächenelementen anzuzeigen.

2. Verfahren nach einem der vorangehenden Ansprüche, wobei die Befehle bei ihrer Ausführung durch den Prozessor ferner bewirken, dass der Prozessor auf der Anzeigevorrichtung der Telekommunikationsvorrichtung eine zweite grafische Benutzeroberfläche anzeigt, wobei das Anzeigen des ersten Satzes von Benutzeroberflächenelementen das Verwerfen der zweiten grafischen Benutzeroberfläche umfasst.

3. Verfahren nach einem der vorangehenden Ansprüche, wobei der Server mit mehreren Telekommunikationsvorrichtungen verbunden ist, wobei das Anzeigen auf der ersten grafischen Benutzeroberfläche umfasst:
- Bestimmen eines Abstands zwischen der Benutzervorrichtung und jeder der Telekommunikationsvorrichtungen;
- Auswählen der Telekommunikationsvorrichtung, die von den mehreren Telekommunikationsvorrichtungen den geringsten Abstand aufweist.

4. Verfahren nach einem der vorangehenden Ansprüche, wobei das Senden der Antwortdaten umfasst:
- Auswählen von einer der Kommunikationseinrichtungen, die eine höhere Datenübertragungsrate aufweist;
- Senden der Antwortdaten unter Verwendung der ausgewählten Kommunikationseinrichtung.

5. Verfahren nach einem der vorangehenden Ansprüche, wobei der Besitzer der Benutzervorrichtung am Anrufzentrum registriert ist, wobei die eingerichtete Kommunikationssitzung eine Sprachkommunikationssitzung ist, wobei das Einrichten ferner umfasst:
- Senden einer Anfrage nach einem Stimmsignal, das mindestens einen vordefinierten Ausdruck wiedergibt, durch einen Benutzer der Benutzervorrichtung über die eingerichtete Kommunikationssitzung;
- Authentifizieren des Benutzers durch Vergleichen des empfangenen Stimmsignals des Benutzers mit einem registrierten digitalen Stimmabdruck des Besitzers.

6. Verfahren nach einem der vorangehenden Ansprüche 1-4, wobei ein Besitzer der Benutzervorrichtung am Anrufzentrum registriert ist, wobei die eingerichtete Kommunikationssitzung eine Videokommunikationssitzung ist, wobei das Einrichten ferner umfasst:
- Aufnehmen eines Bildes eines Benutzers der Benutzervorrichtung, der die eingerichtete Kommunikationssitzung erbittet;
- Authentifizieren des Benutzers durch Vergleichen des aufgenommenen Bildes mit einem registrierten Fingerabdruck des Besitzers.

7. Verfahren nach Anspruch 6 oder 5, ferner umfassend: im Falle einer fehlgeschlagenen Authentifizierung des Benutzers, Schließen der eingerichteten Kommunikationssitzung.

8. Verfahren nach Anspruch 6 oder 5, wobei die eingerichtete Kommunikationssitzung die zweite Kommunikationssitzung ist, wobei das Verfahren ferner umfasst, dass im Falle einer erfolgreichen Authentifizierung des Benutzers die eingerichtete Kommunikationssitzung geschlossen wird und die erste Kommunikationssitzung eingerichtet wird.

9. Verfahren nach einem der vorangehenden Ansprüche, wobei das Konfigurieren des ersten und des zweiten Satzes von Benutzeroberflächenelementen umfasst: Verwenden eines ersten Farbschemas für den ersten Satz von Benutzeroberflächenelementen, um eine Sichtbarkeit des ersten Satzes von Benutzeroberflächenelementen zu verringern.

10. Verfahren nach Anspruch 9, ferner das Verwenden eines zweiten Farbschemas für den zweiten Satz von Benutzeroberflächenelementen umfassend, um die Sichtbarkeit des zweiten Satzes von Benutzeroberflächenelementen zu erhöhen.

11. Verfahren nach einem der vorangehenden Ansprüche, ferner das Zwischenspeichern der Signalisierungsdaten und/oder von Daten, welche die Dienstanfrage angeben und das Verwenden der zwischengespeicherten Daten für nachfolgende Dienstanfragen durch die Benutzervorrichtung umfassend.

12. Computerprogrammprodukt, das computerausführbare Befehle zur Durchführung der Verfahrensschritte des Verfahrens der vorangehenden Ansprüche umfasst.

13. Telekommunikationssystem, eine Anrufzentrale umfassend, wobei die Anrufzentrale einen Server umfasst, der mit mindestens einer Telekommunikationsvorrichtung kommuniziert, wobei der Server einen Prozessor und einen Speicher umfasst, wobei der Speicher eine erste Anwendung speichert, die Befehle umfasst, die bei ihrer Ausführung durch den Prozessor bewirken, dass der Prozessor auf einer Anzeigevorrichtung der Telekommunikationsvorrichtung mindestens eine grafische Benutzeroberfläche anzeigt, wobei das Telekommunikationssystem in der Lage ist, das Verfahren nach einem der vorangehenden Ansprüche auszuführen.

## Revendications

1. Procédé de télécommunication permettant de commander une communication dans un système de télécommunication (1700), le système de télécommunication (1700) comprenant un centre d'appels (1701), le centre d'appels (1701) comprenant un serveur (1707) en communication avec au moins un dispositif de télécommunication (1709A-N), le serveur (1707) comprenant un processeur (1717) et une mémoire (1719), la mémoire (1719) stockant une première application (1721) comprenant des instructions qui, lorsqu'elles sont exécutées par le processeur (1717), font en sorte que le processeur (1717) affiche sur un dispositif d'affichage du dispositif de télécommunication (1709A) au moins une première interface graphique d'utilisateur (1711A, 300, 400), le procédé comprenant :
- la réception d'un premier signal d'initialisation de session de communication par le biais d'un premier réseau (1705) à partir d'un dispositif d'utilisateur (1703A), où le dispositif d'utilisateur (1703A) permet de se connecter au serveur par le biais d'au moins le premier réseau (1705) ;
- la détermination d'une donnée de signalisation indicatrice du dispositif d'utilisateur (1703A) en utilisant un protocole de communication du premier réseau (1705) et le premier signal d'initialisation de communication, la donnée de signalisation indiquant en outre la première session de communication et d'autres systèmes de communication assistés par le dispositif d'utilisateur (1703A) ;
- l'affichage sur la première interface graphique d'utilisateur (1711A, 300, 400) d'un premier ensemble d'éléments d'interface d'utilisateur (420, 405, 430) indicateurs des données de signalisation, le premier ensemble d'éléments d'interface d'utilisateur (405) indiquant en outre des systèmes de communication comprenant une indication de la première session de communication et les autres systèmes de communication ;
- la réception d'une sélection par le biais de la première interface graphique d'utilisateur (1711A, 300, 400) de l'un des systèmes de communication ;
- en réponse à la réception de la sélection des systèmes de communication :
▪ l'établissement de la première session de communication avec le dispositif d'utilisateur (1703A) en fonction du premier signal d'initialisation de session de communication reçu, ou
▪ l'établissement d'une seconde session de communication avec le dispositif d'utilisateur (1703A) en utilisant la donnée de signalisation ;
- la réception d'une demande de service provenant du dispositif d'utilisateur (1703A) par le biais de la session de communication établie ;
- la détermination, en utilisant la demande de service, d'au moins une seconde application pour la génération de données de réponse en réponse à la demande de service ;
- la commande de la seconde application pour la génération des données de réponse ;
- l'affichage sur la première interface graphique d'utilisateur (1711A, 300, 400) d'un second ensemble d'éléments d'interface d'utilisateur indicateurs des données de réponse et de la seconde application, où l'affichage comprend la configuration du premier et/ou du second ensemble d'éléments d'interface d'utilisateur pour afficher le premier et le second ensemble d'éléments d'interface d'utilisateur sur une seule page d'affichage de la première interface graphique d'utilisateur (1711A, 300, 400) ;
- la réception d'une sélection des données de réponse par le biais de la première interface graphique d'utilisateur (1711A, 300, 400) ;
- l'envoi des données de réponse sélectionnées au dispositif d'utilisateur ; et
- la fermeture de la session de communication établie,
- l'affichage sur la première interface graphique d'utilisateur du second ensemble d'éléments d'interface d'utilisateur comprenant : la configuration de la seconde application pour empêcher l'affichage d'interfaces graphiques d'utilisateur par la seconde application, et la réorientation des résultats de la seconde application devant être affichés sur les interfaces graphiques d'utilisateur ménagées vers la première interface graphique d'utilisateur devant être affichée en utilisant le second ensemble d'éléments d'interface d'utilisateur.

2. Procédé selon l'une quelconque des revendications précédentes, dans lequel les instructions, lorsqu'elles sont exécutées par le processeur, font en outre que le processeur affiche sur le dispositif d'affichage du dispositif de télécommunication une seconde interface graphique d'utilisateur, où l'affichage du premier ensemble d'éléments d'interface d'utilisateur comprend le rejet de la seconde interface graphique d'utilisateur.

3. Procédé selon l'une quelconque des revendications précédentes, dans lequel le serveur est connecté à de multiples dispositifs de télécommunication, où l'affichage sur la première interface graphique d'utilisateur comprend :
- la détermination d'une distance entre le dispositif d'utilisateur et chacun des dispositifs de télécommunication ;
- la sélection du dispositif de télécommunication ayant la distance la plus faible parmi les multiples dispositifs de télécommunication.

4. Procédé selon l'une quelconque des revendications précédentes, l'envoi de la donnée de réponse comprenant :
- la sélection d'un des systèmes de communication ayant un taux de transfert de données plus rapide ;
- l'envoi de la donnée de réponse en utilisant le système de communication sélectionné.

5. Procédé selon l'une quelconque des revendications précédentes, dans lequel un propriétaire du dispositif d'utilisateur est enregistré au niveau du centre d'appels, où la session de communication établie est une session de communication vocale, l'établissement comprenant en outre :
- l'envoi d'une demande par le biais de la session de communication établie pour qu'un signal vocal répète au moins un terme prédéfini par un utilisateur du dispositif d'utilisateur ;
- l'authentification de l'utilisateur en comparant le signal vocal reçu de l'utilisateur à une empreinte vocale numérique enregistrée du propriétaire.

6. Procédé selon l'une quelconque des revendications 1 à 4, dans lequel un propriétaire du dispositif d'utilisateur est enregistré au niveau du centre d'appels, où la session de communication établie est une session de communication vidéo, l'établissement comprenant en outre :
- la capture d'une image d'un utilisateur du dispositif d'utilisateur poursuivant la session de communication établie ;
- l'authentification de l'utilisateur en comparant l'image capturée avec une image d'empreinte enregistrée du propriétaire.

7. Procédé selon la revendication 6 ou la revendication 5, comprenant en outre : dans le cas d'une authentification non couronnée de succès de l'utilisateur, la fermeture de la session de communication établie.

8. Procédé selon la revendication 6 ou la revendication 5, dans lequel la session de communication établie est la seconde session de communication, le procédé comprenant en outre, dans le cas d'une authentification réussie de l'utilisateur, la fermeture de l'établissement de la seconde session de communication et l'établissement de la première communication.

9. Procédé selon l'une quelconque des revendications précédentes, dans lequel la configuration du premier et du second ensemble d'éléments d'interface d'utilisateur comprend : l'utilisation d'un premier schéma de couleur pour le premier ensemble d'éléments d'interface d'utilisateur pour diminuer la visibilité du premier ensemble d'éléments d'interface d'utilisateur.

10. Procédé selon la revendication 9, comprenant en outre l'utilisation d'un second schéma de couleur pour le second ensemble d'éléments d'interface d'utilisateur afin d'améliorer la visibilité du second ensemble d'éléments d'interface d'utilisateur.

11. Procédé selon l'une quelconque des revendications précédentes, comprenant en outre la saisie des données de signalisation et/ou des données indiquant la demande de service et l'utilisation des données saisies pour des demandes de service répondant ultérieurement par le dispositif d'utilisateur.

12. Produit-programme informatique comprenant des instructions exécutables par ordinateur pour réaliser les étapes de procédé du procédé selon les revendications précédentes.

13. Système de télécommunication comprenant un centre d'appels, le centre d'appels comprenant un serveur en communication avec au moins un dispositif de télécommunication, le serveur comprenant un processeur et une mémoire, la mémoire stockant une première application comprenant des instructions, qui, lorsqu'elles sont exécutées par le processeur, font en sorte que le processeur affiche sur un dispositif d'affichage du dispositif de télécommunication au moins une première interface graphique d'utilisateur, le système de télécommunication permettant d'exécuter le procédé selon l'une quelconque des revendications précédentes 1 à 11.
